# EUROPÄISCHE PATENTSCHRIFT

(11) **EP 2 299 087 B1**
(45) Veröffentlichungstag und Bekanntmachung des Hinweises auf die Patenterteilung: **27.07.2016**
(21) Anmeldenummer: 10008215.5
(22) Anmeldetag: 06.08.2010
(51) Int. Cl.: F02C 7/12, F02B 37/00, F01D 25/24, F02B 39/00

(54) **Abgasturbolader**
Turbocharger
Turbocompresseur

(30) Priorität: 22.09.2009 DE 102009042260
(43) Veröffentlichungstag der Anmeldung: 23.03.2011
(73) Patentinhaber: Benteler Automobiltechnik GmbH, 33102 Paderborn (DE)
(72) Erfinder: Grussmann, Elmar, 33184 Buke (DE); Smatloch, Christian, 33100 Paderborn (DE); Landermann, Lars, 32052 Herford (DE)
(74) Vertreter: Griepenstroh, Jörg

(56) Entgegenhaltungen:
- WO-A1-2009/106166
- DE-A1- 10 061 846
- JP-A- 2002 349 276
- JP-A- 2003 293 779

## Beschreibung

Die Erfindung betrifft einen Abgasturboladers mit den Merkmalen im Oberbegriff, des Patentanspruchs 1.

Brennkraftmaschinen für Kraftfahrzeuge werden in zunehmendem Maße durch. Turbolader aufgeladen, um eine Reduzierung des Kraftstoffverbrauchs zu erreichen. Aber auch das Gewicht der Abgasanlage selbst hat Einftuss auf den Kraftstoffverbrauch. Turbolader sollten daher möglichst geringes Gewicht besitzen. Dem steht entgegen, dass Turbolader während ihres Einsatzes erheblichen mechanischen und insbesondere höchsten thermischen Belastungen ausgesetzt sind, die eine robuste Bauweise erforderlich machen. Wesentlichen Einfluss auf die Lebensdauer eines Turboladers haben thermisch induzierte Spannungen.

In der DE 100 22 052 A1 wird die Entkopplung von Abgas führenden Bauteilen und tragenden bzw. dichtenden Außenstrukturen vorgeschlagen. Während die Abgas führenden Bauteile eines Turboladers so hohen thermischen Belastungen aufgesetzt sind, dass sie im Betrieb glühen, sind die thermischen Belastungen der dichtenden Außenstruktur geringer. Allerdings unterliegt auch das Außengehäuses besonders in den Bereichen der Anbindung an das Lagergehäuse eines Turboladers sehr hohen belastungen. Das Aüßensystem bzw. Außengehäuse eines Abgasturboladers besteht in der Regel aus umgeformten Blechschalen. Sie sind üblicherweise über eine Schmelzschvireißverbindung mit einem Lagerflansch verschweißt, welcher zur Befestigung des Abgasturboladers an einem Lagergehäuse eines Turbinenrads dient. Während das Lagergehäuse zur Aufrechterhaltung der Lagerung gekühlt wird und somit auch der Lagerflansch durch seinen direkten Kontakt mit dem Lagergehäuse gut gekühlt ist, wird eine erhebliche Wärmemenge über das Außengehäuse in den Lagerflansch eingetragen. Die Stelle des höchsten Temperaturgradienten innerhalb des Lagerflansches liegt in der Nähe der Fügelinie zur Blechstruktur des Außengehäuses bzw. Innengehäuses des Abgasturboladers. Gerade dieser Bereich ist jedoch geometrisch und werkstofftechnisch durch den Schmelzschweißvorgang geschwächt. An dieser Stelle kann es unter extremen Belastungen zu Ermüdungserscheinurigen kommen.

Aus der JP 2003 293779 A ist ein Abgasturbalader mit einem Außengehäuse, in welchem ein Laufradgehäuse angeordnet ist bekannt. Das Außengehäuse ist mit einem Lagerflansch verschweißt, welcher zur Befestigung des Abgasturboladers an einem Lagergehäuse eines Turbinenrades vorgesehen ist. Der Lagerflansch weist einen außenseitig umlaufenden Steg auf, über welchen das Außengehäuse mit dem Lagerflansch verschweißt ist, wobei der Steg einen gegenüber seinem freien Ende verbreiterten Basisabschnitt aufweist. Eine vergleichbare Lösung wird in der JP 2002 349276 offenbart. Während bei diesen beiden Lösungen das zum verschweißen vorgesehene Ende des Außengehäuses sich in Axialrichtung erstreckt, kann es gemäß WO 2009/106166 A1 auch in radialer Orientierung an dem Steg anliegen. Die Verbindungsabschnitte, die dem Zentrum der Schweißeinflusszone gleichzusetzen sind, befinden sich sehr nah am Lagergehäuse und somit gerade dort, wo Einflüsse aus Schmelzschweißvorgängen möglichst vermieden werden sollen.

Hiervon ausgehend liegt der Erfindung die Aufgabe zu Grunde, einen Abgasturbolader aufzuzeigen mit einem Außengehäuse aus einer geformten Blechstruktur, wobei der Verbindungsbereich zwischen dem Außengehäuses und dem Lagerflansch unter thermomechanischen Gesichtspunkten optimiert ist, um geringere Temperaturgradienten im Lagerflansch zu realisieren.

Diese Aufgabe ist bei einem Abgasturbolader mit den Merkmalen des Patentanspruchs 1 gelöst.

Die Unteransprüche betreffen vorteilhafte Weiterbildungen.

Der erfindungsgemäße Abgasturbolader zeichnet sich dadurch aus, dass der Lagerflansch einen außenseitig umlaufenden Steg aufweist, über welchen das Außengehäuse mit dem Lagerflansch verschweißt ist. Der Steg weist einen gegenüber seinem freien Ende verbreiterten Basisabschnitt auf. Die Verbreiterung , dieses Basisabschnitts bewirkt, dass die über das Außengehäuse eingebrachte Wärmemenge über eine sich verbreiternde Querschnlttsfläche in den massivere Grundkörper des Lagerflansches übertreten kann. Der Steg soll gewissermaßen sanft oder auch im Wesentlichen gerundet in den Grundkörper des Lagerflaneches obergehen. Die Querschnittsänderung des Stegs erfolgt vorzugsweise kontlnulerllch oder nur mit kleinen Sprüngen, um hohe Temperaturgradienten so weit wie möglich zu vermeiden.

Gleichzeitig soll der Steg jedoch in seiner Wandstärke dermaßen auf die Wandstärke des Außengehäuses abgestimmt sein, dass eine Schmelzschweißverbindung zu einem möglichst gleichmäßigen Wärmeeintrag in den Steg und in das Außengehäuse führt. Daher liegt die Wandstärke des Stegs vorzugsweise in einem Bereich von 0.9 bis 1,3 der Wandstärke des Außengehäuse. Diese Angabe bezieht sich auf die miteinander zu verschweißenden Abschnitte des Stegs und des Außengehäuses. Indem die Wandstärken aufeinander abgestimmt werden, wird weder der Steg noch das Außengehäuse beim Schmelzschweißen Liberproportional stark aufgeschmolzen. Durch die Wandstärkenabstimmung des Stegs und des Außengehäuses ergibt sich eine Anpassung der Schweißeinflusszönen, was ebenfalls zu einem optimierten Wärmeübergang und zu einer geringeren werkutofftechnischen Beeinträchtigung der Schweißverbindung führt. Thermisch bedingte Ermüdungserscheinungen können reduziert werden.

Um einen möglichst gleichbleibenden Temperaturgradienten zu realisieren, Ist vorgesehen, dass die Breite des Basisabschnitts mit zunehmendem Abstand vom freien Ende des Stegs zunimmt. Die Zunahme erfolgt vorzugsweise kontinuierlich, was insbesondere durch gerundete Übergänge zu erreichen ist. Es ist im Rahmen der Erfindung aber auch nicht ausgeschlossen, mehrere gestufte Obergangsbereiche vorzusehen, so dass der Basisabschnitt zum Grundkörper des Lagerflansches stufenweise breiter wird. Aus fertigungstechnischer Sicht können bereits 2-4 Stufen ausreichend sein.

Der Steg soll bei dem erfindungsgemäßen Abgasturbolader außenseitig umlaufend angeordnet sein. Unter, einer Außenseite ist die radial Außenseite des Lagerflansches zu verstehen. Der Steg wird insbesondere dadurch ausgebildet, dass beiderseits des Stegs Nuten ausgebildet werden. In die dem Innengehäuse zugewandte Nut kann das Außengehäuse eingreifen. Insbesondere wenn das Außengehäuse aus Blechschalen gebildet wird, ist es möglich, dass eine Oberschale und eine Unterschale einander gegenübediegend in die Nut eingreifen Durch die Nut können Fertigungstoleranzen ausgeglichen werden. Zudem wird das Außengehäuse während des Schweißvorgangs in der Nut geführt.

Bei einer solchen Anordnung kann das Außengehäuse in Axialrichtung an dem Steg anliegend mit diesem verschweißt sein. In diesem Fall weisen der Steg und der Lagerflansch an ihren Verbindungsabschnitten in Radialrichtung des Lagerflanschen. Die Axialrichtung des Lagerflansche fällt mit der Drehachse des Turbinenrads des Turboladers zusammen. Die Radialrichtung steht senkrecht zur Axialrichtung.

Wenn der Steg und das Außengehäuse an ihren Verbindungsabschnitten jeweils in Axialrichtung des Lagerflansches weisen, liegen diese ähnlich wie Zylindermantelflächen aneinander. Per Verbindungsabschnitt des Stegs verläuft in diesem Fall im Abstand zum Grundkörper des Lagerflansches. Daher besitzt der Steg in diesem Fall einen sich in Radialrichtung erstreckenden Verbindungsabschnitt, welcher gegenüber dem Basisabschnitt abgewinkelt ist. Es handelt sich um eine 90°-Abwinklung. Andere Winkel sind möglich.

Der Basisabschnitt kann einen gerundeten Übergang zum Lagerflansch aufweisen. Bei der abgewinkelten Variante des Stegs kann die Abwinklung durch spanlose Umformung erfolgen, so dass sich im Übergangsbereich vom Basisabschnitt zum Verbindungsabschnitt ebenfalls gerundete Übergänge ergeben.

Bei dem erfiridungsgemäßen Abgasturbolader kann das Innengehäuse als separates Bauteil ausgebildet sein und stoffschlüssig, formschlüssig oder kraftschlüssig mit dem Lagerflansch verbunden sein. Das heißt, das Innengehäuse kann mit dem Lagerflansch z.B. verbördelt, verklemmt oder verschweißt sein. Es ist aber auch möglich, dass das innengehäuse einstückig mit dem Lagerflansch ausgebildet ist. In diesem Fall ist es aus konstruktive Gründen notwendig, das Außengehäuse aus einer Oberschale und einer Unterschale zu bilden, die dann über das Innengehäuse gestülpt werden, um mit dem im Abstand vom Innengehäuse angeordneten Steg des Lagerflansches verschweißt zu werden.

Grundsätzlich wird es als vorteilhaft angesehen, wenn das Innengehäuse im Abstand zum Außengehäuse mit dem Lagerflansch verbunden ist. Hierdurch gelingt es, die Wärmemengen, die vom Außengehäuse und vom Innengehäuse in den Lagerflansch eingebracht werden, zu verteilen, so dass es nicht zu den unerwünscht hohen Temperaturgradienten im Anbindungsbereich zum Lagerflansch kommt. Insbesondere wird die Wärme aus dem Innensystem nicht unmittelbar an das Außengehäuse weitergeleitet und von diesem wiederum über die Schweißeinflusszone in den Lagerflansch.

Es wird als zwecksmäßig angesehen, wenn eine Schweißnaht, über welche der Steg mit dem Außengehäuse verbunden ist, als Kehlnaht entweder stirnseitig des Stegs oder stirnseitig des Außengehäuses verläuft. Bei jeweils in Radialrichtung weisenden Verbindungsabschnitten des Außengehäuses und des Lagerflansches ist es zwecksmäßig, die radial orientierte Stirnseite des Stegs mit einer Außenseite des Außengehäuses zu verschweißen. In dem anderen Fall, in welchem der Steg und , das Außengehäuse in ihren Verbindungsabschnitten in Axialrichtung des Lagerflansches weisen, ist es zweckmäßig, die Stirnseite des Außengehäuses an einer in diesem Fall radial außen umlaufenden Außenseite des Stegs zu verschweißen.

Mit dem erfindungsgemäßen Abgasturbolader ist eine sehr gute Positionierung des Außengehäuses in einer dem Steg benachbarten Nut möglich. Fertigungstoleranzen können ausgeglichen werden. Es kann ein gleichmäßiger, qualitativ hochwertige Fügeprozess mit nur geringer Wärmeeinbringung realisiert Werden, was durch die Verbindung in etwa gleich dicker Wandstärken möglich ist, wobei die Wandstärken um nicht mehr als 10-30 % voneinander abweichen sollten. Durch die Reduzierung von Spannungsspitzen wird die Dauerhaltbarkeit verbessert. Schließlich ist als weiterer Vorteil zu nennen, dass das Fugen des Außengehäuses im Außenbereich des Lagerflansches generell von Vorteil ist, da dadurch keine. Rückstände des Fügevorgangs, insbesondere Schweißspritzer, in das Innere des Turbinengehäuses gelangen können:
Die Erfindung wird nachfolgend anhand der in den Figuren 1 bis 3 dargestellten Ausführungsbeispiele näher erläutert. Es zeigt:
   - Figur 1: einen Querschnitt durch ein Turbinengehäuse;
   - Figur2: ein Detail des Anblndungsberelchs des Außengehäuses an einem Lagerflansch und
   - Figur 3: eine alternative Ausführungsform des Anbindungsbereich des Außengehäuses an einem Lagerflansch.

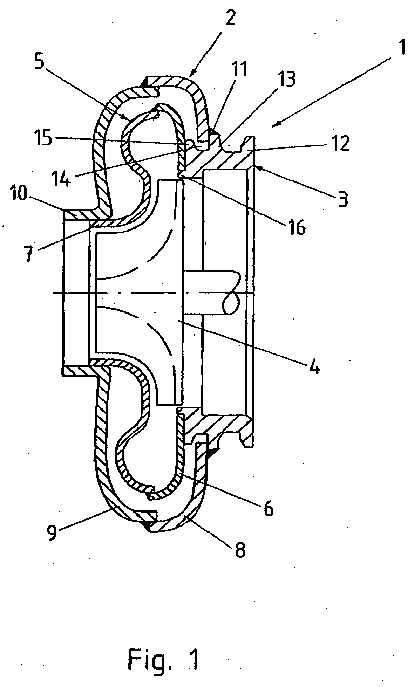

Figur 1 zeigt ein Turbinengehäuse 1 eines Abgasturboladers. Das Turbinengehäuse 1 umfasst ein Außengehäuse 2, das mit einem Lagerftanach 3 verschweißt ist. Der Lagerflansch 3 dient zur Befestigung des dargestellten Abgasturboladers an einem nicht näher dargestellten Lagergehäuse, in welchem ein Turbinenrad 4 gelagert ist

Das Außengehäuse 2 begrenzt einen gasdichten Innenraum. Innerhalb des Außengehäuses 2 befindet sich ein Laufradgehäuse 5, das aus zwei Blechschalen 6, 7 gebildet ist, die am Außenumfang des Laufradgehäuses 5 miteinander verschweißt sind. Auch das Außengehäuses 2 besteht aus zwei Blechschälen 8, 9, welche in diesem Ausfohrungsbeispiel ebenfalls am Außenumfang miteinander verschweißt sind. Die in der Bildebene linke Blechschale 7 des Laufradgehäuses 5 greift hier in einen Stutzen 10 der Blechschale 9 des Außengehäuses 2. Die jeweils anderen, dem Lagerflansch 3 zugewandten Blechschalen 6, 8 des Außengehäuses 2 und des Laufradgehäuses 5 sind mit dem Lagerflansch 3 verbunden.

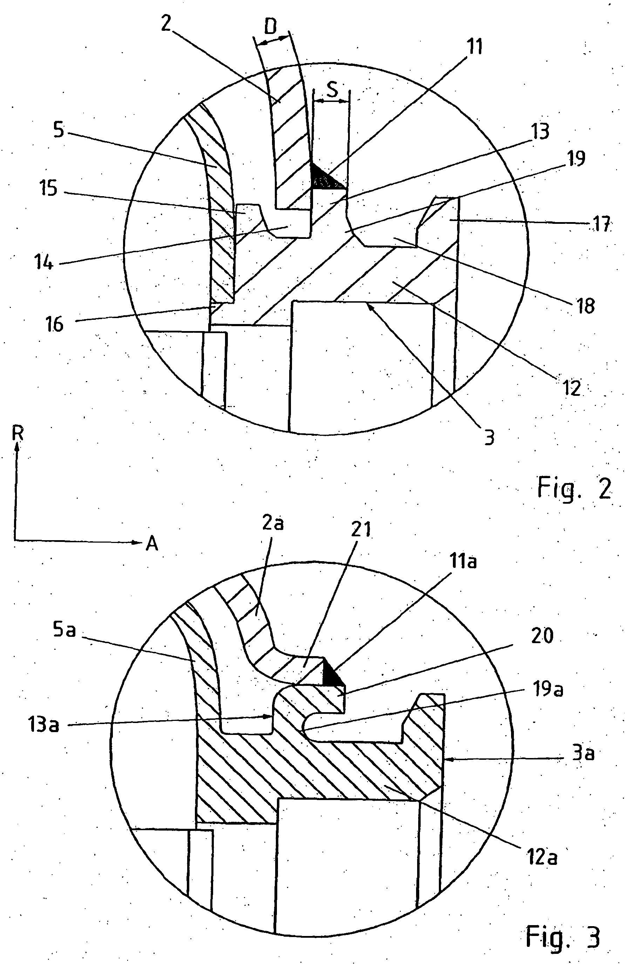

Die Blechschale 8 ist über eine Schweißnaht 11 mit einem in Radialrichtung gegenüber einem Grundkörper 12 des Lagerflansches 3 vorstehenden Steg 13 verschweißt. Dem Steg 13 ist in Richtung des Laufradgehäuses 5 eine Nut 14 vorgelagert, auf die wiederum ein Kragen 15 folgt, an welchem schließlich die Blechschale 6 des Laufradgehäuses 5 stirnseitig, d.h. in Axialrichtung, anliegt. Die Blechschale 6 umgreift in diesem Ausführungsbeispiel radial außenseitig einen in Axialrichtung vorstehenden Vorsprung 16. Einzelheiten dieser Verbindung gehen aus der Figur 2 hervor.

Wesentlich bei der erfindungsgemäßen Anbindung des Außengehäuses 2 ist die Konfiguration des Stegs 13. Der Steg 13 steht in Radialrichtung R über den sich in Axialrichtung A wesentlich breiteren Grundkörper 12 vor. Der Grundkörper 12 ist entsprechend massiv ausgebildet, da über ihn das Außengehäuse 2 und das Laufradgehäuse 5 mit dem nicht näher dargestellten Lagergehäuse verbunden werden Der Grundkörper 12 weist geeignete Anbindungsabschnitte zur Befestigung des Lagerflansches 3 an dem Lagergehäuse auf. Hierzu ist ein radial vorstehender Kragen 17 auf der Lagergehäuseseite des Lagerflansches 3 vorgesehen. Auf den Kragen 17 folgt eine radial umlaufende Eindrehung zur Ausbildung einer Nut 18, auf Welche der Steg 13 folgt. Der Steg 13 befindet sich somit zwischen den beiderseitigen Nuten 14, 18, die wiederum in Axialrichtung außen von den beiden Kragen 15, 17 begrenzt werden. Somit ergibt sich im Querschnitt eine im Wesentlichen W-förmige Außenkontur.

Der etwa mittig angeordnete Steg 13 besitzt einen verbreiterten Basisabschnitt 19. Der verbreiterte Basisabschnitt 19 beginnt etwa auf halber radialer Höhe des Stegs 13. Die Verbreiterung nimmt in Richtung der lagergehäuseseitigen Nut 18 in zwei Schritten zu. Während die Flanken des freien Endes des Stegs 13 parallel zueinander verlaufen, ist eine der Nut 18 zugewandte Flanke des Basisabschnitts 19 in einem ersten Höhenabschnitt mit einer ersten Neigung und in einem zweiten, unteren (radial innenliegend) Höhenabschnitt mit einer zweiten Neigung versehen, wobei die zweite Neigung in Bezug auf die Axialrichtung größer Ist als die ersten. Dadurch ergibt sich in erster Annäherung eine Bogenform. Die Bogenform bzw. die Verbreiterung des Basisabschnitts 19 ist gezielt auf der lagergehäuseseitigen Flanke des Stegs 13 vorgesehen, da es in diesem Bereich zu besonders hohen thermischen Belastungen kommt.

Durch die Schweißnaht 11 ist das obere freie Ende des Stegs, 13 durch den Schmelzschweißvorgang einer Gefügeveränderung unterworfen. Das freie Ende des Stegs 13 liegt in der Schweißeinflusszone. Um diese geschwächte Zone, in weiche gleichzeitig hohe Temperaturen über das angeschweißte Außengehäuse 2 eingeleitet werden, vor zu starken Temperaturgradienten zu schützen, ist der Basisabschnitt 19 des Stegs 13 verbreitert ausgebildet. Die aus dem Außengehäuses 2 eingeleitete Wärme wird, ohne zu große thermische Spannzungen zu erzeugen, in Richtung der gekühlten Lagergehäuseseite des Lagerflansches 3 eingeleitet.

Auch die Nut 14 spielt eine wichtige Rolle. Die Nut 14 dient einerseits als Positionierhilfe während des Verschweißens des Außengehäuses mit dem Lagerflansch 3. Zudem können durch die Nut 14 Fertigungstoleranzen ausgeglichen werden Bei diesem Ausführungsbeispiel greift das Außengehäuse 2 ein wenig in die Nut 14 hinein und somit gewissermaßen hinter den in Radialrichtung R vorstehenden Kragen 15. Das ist möglich, weil das Außengehäuse 2 bzw. die in Figur 1 dargestellte Blechschale 8 selbst wiederum zweiteilig ausgebildet ist, so dass die Teilstücke der Blechschale 8 unterschiedlich tief in die Nut 14 greifen können. Bei einer einteiligen Blechschale 8 des Außengehäuses 2 dient der Steg mit Begrenzung der Nut lediglich als Anschlag. Der Kragen. 15 ist entsprechend kürzer zu gestalten, damit eine Montage möglich ist.

Ein weiterer positiver Effekt zur Minimierung des Temperaturgradienten ist, dass das Laufradgehäuse 5 im Abstand vom Außengehäuse 2 an dem Lagerflansch 3 befestigt ist. Der Abstand ist maximal gewählt. Zudem ist der Kontaktbereich des Laufradgehäuses 5 mit dem Grundkörper 12 relativ groß, wie anhand der Figur 2 zu erkennen ist. Dadurch kann das thermisch wesentlich stärker belastete Laufradgehäuse 5 eine entsprechend große Wärmemenge an den Grundkörper 12 ableiten. Die Fixierung des Laufradgehäuses 5 an dem Grundkörper 12 kann stoffschlüssig, formschlüssig oder kraftschlüssig erfolgen.

Als weiterer Vorteil wird angesehen, dass die Wandstärke S des Stegs 13 in einem Bereich von 0,9 bis 1,3 der Wandstärke D des Außengehäuses liegt. Dadurch werden gleich dicke Bauteile miteinander verschweißt, was den Fügevörgang erheblich vereinfacht. Es werden beim Schmelzschweißen etwa gleich große Wärmemengen in die miteinander zu verbindenden Bauteile, eingebracht, so dass sich gleichmäßigere Schweißeinflusszonen ergeben.

Bei der Ausführungsform der Figur 2 liegt das Außengehäuse 2 gewissermaßen axial innenseitig an dem Steg 13 an, so dass die Schweißnaht 11 als Kehtnaht ausgebildet ist. Die Schweißnaht 11 verläuft bei diesem Ausführungsbeispiel quasi stirnseitig (= radial außen) des Stegs 13.

Bei dem Ausführungsbeispiel der Figur 3 ist der Lagerflansch 3a einstückig zusammen mit dem Laufradgehäuse 5a ausgebildet Das Außengehäuse 2a ist über eine Schweißnaht 11 a mit einem Steg 13a verschweißt. Auch dieser Steg 13a besitzt einen verbreiterten Basisabschnitt 19a zum Grundkörper 12a des Lagerflansches 3a hin. Das Besondere ist jedoch, dass der Steg 13a einen Verbindungsabschnitt 20 besitzt, der gegenüber dem Basisabschnitt 19a um 90° in Richtung der Lagergehäuseseite des Lagerflansches 3a abgewinkelt ist. Bel dieser Ausführungsform weist somit der Steg 13a bzw. dessen Verbindungsabschnitt 20, ebenso wie ein Verbindungsabschnitt 21 des Außengehäuses 2a, in Axiatrichtung A. Im Unterschied zum Ausführungsbeispiel der Figur 2 befindet sich die schweißnaht 11a bei dieser Variante nicht stirnseitig, d.h. an der zum Lagergehäuse weisenden axialen Seite des Stegs 13a, sondern vielmehr stirnseitig des Verbindungsabschnitts 21 des Außengehäuses 2a, so dass die Schweißnaht 11a als Kehlnaht ausgebildet ist. Zu diesem Zweck ist das Außengehäuse 2a etwas in Richtung des Laufradgehäuses 5a nach innen versetzt. Wie bei dem Ausführungsbeispiel der Figur 2 sind die Wanddicken der Verbindungsabschnitte 20, 21 nahezu identisch, so dass gleich dicke Bauteile miteinander verschweißt werden. Durch den Basisabschnitt 19a mit gerundetem Übergang zum Grundkörper 12a des Lagerflansches 13a können auch bei dieser Ausführungsform hohe Temperaturgradienten vermieden werden.

### Bezugszeichen:

1 - Turbinengehäuse
2 - Außengehäuses
2a - Außengehäuse
3 - Lagerflansch
3a - Lagerflansch
4 - Turbinenrad
5 - Laufradgehäuse
5a - Laufradgehäuse
6 - Blechschale
7 - Blechschale
8 - Blechschale
9 - Blechschale
10 - Stutzen
11 - Schweißnaht
11a- Schweißnaht
12 - Grundkörper
12a- Grundkörper
13 - Steg
13a - Steg
14 - Nut
15- Kragen
16 - Vorsprung
17 - Kragen
18- Nut
19 - Basisabschnitt
19a - Basisabschnitt
20 - Verbindungsabschnitt
21 - Verbindungsabschnitt
A - Axialrichtung
D - Wandstärke
R - Radialrichtung
S - Wandstärke

## Patentansprüche

1. Abgasturbolader mit einem Außengehäuse (2, 2a), in welchem ein Laufradgehäuse (5, 5a) angeordnet ist, wobei das Außengehäuse (2, 2a) mit einem Lagerflansch (3, 3a) verschweißt ist, welcher zur Befestigung an einem Lagergehäuse eines Turbinenrads (4) vorgesehen ist, wobei der Lagerflansch (3, 3a) einen sich in Axialrichtung (A) erstreckenden Grundkörper (12, 12a) und einen außenseitig umlaufenden Steg (13, 13a) aufweist, über welchen das Außengehäuse (2, 2a) mit dem Lagerflansch (3, 3a) verschweißt ist, wobei der Steg (13, 13a) in Radialrichtung (R) über dem Grundkörper (12, 12a) vorsteht, und einen gegenüber seinem freien Ende verbreiterten Basisabschnitt (19, 19a) sowie einen über den Basisabschnitt (19, 19a) beabstandet zum Grundkörper (12, 12a) vorgesehenen Verbindungsabschnitt (20) aufweist, mittels welchem das Außengehäuse (2, 2a) mit dem Lagerflansch (3, 3a) verschweißt ist, **dadurch gekennzeichnet, dass** der Steg (13, 13a) zwischen zwei Nuten angeordnet ist.

2. Abgasturbolader nach Anspruch 1, **dadurch gekennzeichnet, dass** die Breite des Basisabschnitts (19, 19a) mit zunehmendem Abstand vom freien Ende des Stegs (3, 3a) zunimmt.

3. Abgasturbolader nach Anspruch 1 oder 2, **dadurch gekennzeichnet, dass** die Wandstärke (S) des Stegs (13, 13a) in einem Bereich von 0,9 bis 1,3 der Wandstärke (D) des Außengehäuses (2, 2a) liegt.

4. Abgasturbolader nach einem der Ansprüche 1 bis 3, **dadurch gekennzeichnet, dass** unmittelbar benachbart zum Steg (13, 13a) eine Nut (14) ausgebildet ist, in welche das Außengehäuse (2) greift.

5. Abgasturbolader nach einem der Ansprüche 1 bis 4, **dadurch gekennzeichnet, dass** das Außengehäuse (2, 2a) aus Blechschalen (8, 9) gebildet ist, wobei eine Oberschale und eine Unterschale einander gegenüberliegend in die Nut (14) eingreifen.

6. Abgasturbolader nach einem der Ansprüche 1 bis 5, **dadurch gekennzeichnet, dass** der Steg (13) in Radialrichtung (R) des Lagerflansches (3) vorsteht, wobei das Außengehäuse (2) in Axialrichtung (A) an dem Steg (13) anliegend mit diesem verschweißt ist.

7. Abgasturbolader nach einem der Ansprüche 1 bis 5, **dadurch gekennzeichnet, dass** der Steg (13a) und, das Außengehäuse (2a) in ihren Verbindungsabschnitten (19, 20) in Axialrichtung (A) des Lagerflansches (3a) weisen.

8. Abgasturbolader nach Anspruch 7, **dadurch gekennzeichnet, dass** der Steg (13a) einen sich in Radialrichtung (R) erstreckenden Basisabschnitt (19a) besitzt, gegenüber welchem der Verbindungsabschnitt (20) abgewinkelt ist.

9. Abgasturbolader nach Anspruch 7 oder 8, **dadurch gekennzeichnet, dass** der Basisabschnitt (19a) einen gerundeten Übergang zum Lagerflansch (3a) aufweist.

10. Abgasturbolader nach einem der Ansprüche 1 bis 9, **dadurch gekennzeichnet, dass** das Innengehäuse (5a) einstückig mit dem Lagerflansch (3a) ausgebildet ist.

11. Abgasturbolader nach einem der Ansprüche 1 bis 9, **dadurch gekennzeichnet, dass** das Innengehäuse (5) im Abstand zum Außengehäuse (2) an dem Lagerflansch (3) befestigt ist.

12. Abgasturbolader nach einem der Ansprüche 1 bis 11, **dadurch gekennzeichnet, dass** eine Schweißnaht (11, 11a), über weiche der Steg (13, 13a) mit dem Außengehäuse (2, 2a) verbunden ist, als Kehlnaht entweder stirnseitig des Stegs (13) oder stirnseitig des Außengehäuses (2a) verläuft.

## Claims

1. Exhaust-gas turbocharger, having an outer housing(2, 2a) in which an impeller housing (5, 5a) is arranged, the outer housing (2, 2a) being welded to a bearing flange (3, 3a) which is provided for fastening to a bearing housing of a turbine wheel (4), said bearing flange (3, 3a) comprising a base body (12, 12a) extending in the axial direction (A), and an outer circumferential web (13, 13a) by means of which the outer housing (2, 2a) is welded to the bearing flange (3, 3a), the web (13, 13a) projecting over the base body (12, 12a) in the radial direction (R), and comprising a base portion (19, 19a) which is wider than its free end, as well as a connecting portion (20) which is spaced from the base body (12, 12a) by means of the base portion (19, 19a), the outer housing (2, 2a) being welded to the bearing flange (3, 3a) by means of said connecting portion (20), **characterised in that** the web (13, 13a) is arranged between two grooves.

2. Exhaust-gas turbocharger according to claim 1, **characterised in that** the width of the base portion (19, 19a) increases as the distance from the free end of the web (3, 3a) increases.

3. Exhaust-gas turbocharger according to claim 1 or 2, **characterised in that** the wall thickness (s) of the web (13, 13a) is in a range from 0.9 to 1.3 of the wall thickness (D) of the outer housing (2, 2a).

4. Exhaust-gas turbocharger according to one of claims 1 to 3, **characterised in that** immediately adjacent to the web (13, 13a) is formed a groove (14) in which the outer housing (2) engages.

5. Exhaust-gas turbocharger according to one of claims 1 to 4, **characterised in that** the outer housing (2, 2a) is formed of sheet-metal shells (8, 9), a top shell and a bottom shell engaging in the groove (14) opposite one another.

6. Exhaust-gas turbocharger according to one of claims 1 to 5, **characterised in that** the web (13) projects in the radial direction (R) of the bearing flange (3), said outer housing (2) resting on the web (13) in the axial direction and being welded thereto.

7. Exhaust-gas turbocharger according to one of claims 1 to 5, **characterised in that** the web (13a) and the outer housing (2a) point in the axial direction (A) of the bearing flange (3a) in their connecting portions (19, 20).

8. Exhaust-gas turbocharger according to claim 7, **characterised in that** the web (13a) has a base portion (19a) extending in the radial direction (R), relative to which the connecting portion (20) is bent at an angle.

9. Exhaust-gas turbocharger according to claim 7 or 8, **characterised in that** the base portion (19a) has a rounded transition towards the bearing flange (3a).

10. Exhaust-gas turbocharger according to one of claims 1 to 9, **characterised in that** the inner housing (5a) is formed in one piece with the bearing flange (3a).

11. Exhaust-gas turbocharger according to one of claims 1 to 9, **characterised in that** the inner housing (5) is attached to the bearing flange (3) at a spacing from the outer housing (2).

12. Exhaust-gas turbocharger according to one of claims 1 to 11, **characterised in that** a weld seam (11, 11 a), by which the web (13, 13a) is connected to the outer housing (2, 2a), extends as a fillet weld either on the end face of the web (13) or on the end face of the outer housing (2a).

## Revendications

1. Turbocompresseur à gaz d'échappement comportant une enveloppe externe (2, 2a), dans laquelle est aménagé un logement de rotor (5, 5a), dans lequel l'enveloppe externe (2, 2a) est soudée à une bride de palier (3, 3a) qui est destinée à être fixée à un logement de palier d'une roue de turbine (4), dans lequel la bride de palier (3, 3a) présente un corps de base (12, 12a) s'étendant dans la direction axiale (A) et une nervure périphérique côté extérieur (13, 13a) via lequel l'enveloppe externe (2, 2a) est soudée à la bride de palier (3, 3a), dans lequel la nervure (13, 13a) fait saillie du corps de base (12, 12a) dans la direction radiale (R) et présente une section de base (19, 19a) élargie vis-à-vis de son extrémité libre ainsi qu'une section de liaison (20) aménagée sur la section de base (19, 19a) à distance du corps de base (12, 12a), au moyen de laquelle l'enveloppe externe (2, 2a) est soudée à la bride de palier (3, 3a), **caractérisé en ce que** la nervure (13, 13a) est ménagée entre deux rainures.

2. Turbocompresseur à gaz d'échappement selon la revendication 1, **caractérisé en ce que** la largeur de la section de base (19, 19a) augmente à distance croissante de l'extrémité libre de la nervure (3, 3a).

3. Turbocompresseur à gaz d'échappement selon la revendication 1 ou la revendication 2, **caractérisé en ce que** l'épaisseur de paroi (S) de la nervure (13, 13a) se situe dans une plage de 0,9 à 1,3 de l'épaisseur de paroi (D) de l'enveloppe externe (2, 2a).

4. Turbocompresseur à gaz d'échappement selon l'une quelconque des revendications 1 à 3, **caractérisé en ce qu'**au voisinage direct de la nervure (13, 13a) est ménagée une rainure (14) dans laquelle l'enveloppe externe (2) s'engage.

5. Turbocompresseur à gaz d'échappement selon l'une quelconque des revendications 1 à 4, **caractérisé en ce que** l'enveloppe externe (2, 2a) est formée de coques de tôle (8, 9), dans lequel une coque supérieure et une coque inférieure s'engagent en regard l'une de l'autre dans la rainure (14).

6. Turbocompresseur à gaz d'échappement selon l'une quelconque des revendications 1 à 5, caractérisé en ce la nervure (13) fait saillie dans la direction radiale (R) de la bride de palier (3), dans lequel l'enveloppe externe (2) appliquée dans la direction axiale (A) sur la nervure (13) est soudée à celle-ci.

7. Turbocompresseur à gaz d'échappement selon l'une quelconque des revendications 1 à 5, caractérisé en ce la nervure (13a) et l'enveloppe externe (2a) sont tournées, dans leurs sections de liaison (19, 20), dans la direction axiale (A) de la bride de palier (3a).

8. Turbocompresseur à gaz d'échappement selon la revendication 7, **caractérisé en ce que** la nervure (13a) possède une section de base (19a) s'étendant dans la direction radiale (R), vis-à-vis de laquelle la section de liaison (20) est repliée.

9. Turbocompresseur à gaz d'échappement selon la revendication 7 ou la revendication 8, caractérisé en ce la section de base (19a) présente une transition arrondie avec la bride de palier (3a).

10. Turbocompresseur à gaz d'échappement selon l'une quelconque des revendications 1 à 9, **caractérisé en ce que** le logement interne (5a) est formé d'un seul tenant avec la bride de palier (3a).

11. Turbocompresseur à gaz d'échappement selon l'une quelconque des revendications 1 à 9, **caractérisé en ce que** le logement interne (5) est fixé à la bride de palier (3) à distance de l'enveloppe externe (2).

12. Turbocompresseur à gaz d'échappement selon l'une quelconque des revendications 1 à 11, **caractérisé en ce qu'**un cordon de soudure (11, 11a), par lequel la nervure (13, 13a) est reliée à l'enveloppe externe (2, 2a), s'étend sous la forme d'une soudure d'angle côté avant de la nervure (13) ou côté avant de l'enveloppe externe (2a).
